# FASCICULE DE BREVET EUROPEEN

(11) **EP 0 557 667 B1**
(45) Date de publication et mention de la délivrance du brevet: **10.03.1999**
(21) Numéro de dépôt: 92450018.4
(22) Date de dépôt: 16.12.1992
(51) Int. Cl.: G01F 13/00, G01F 15/00, B67D 5/30

(54) **Procédé de distribution de quantités dosées de liquides notamment visqueux et dispositif pour sa mise en oeuvre**
Ausgabeverfahren von portionierten Flüssigkeitsmengen, insbesondere von viskosen Flüssigkeiten, und Vorrichtung zur Durchführung des Verfahrens
Distribution method of metered quantities of liquids, particularly viscous liquids, and device for carrying out the method

(30) Priorité: 20.12.1991 FR 9116276
(43) Date de publication de la demande: 01.09.1993
(73) Titulaire: ETABLISSEMENTS LURO, Société à Responsabilité Limitée dite :, F-33470 Gujan-Mestras (FR)
(72) Inventeur: Luro, Claude, F-33470 Gujan-Mestras (FR)
(74) Mandataire: Thébault, Jean-Louis

(56) Documents cités:
- EP-A- 0 296 648
- WO-A-86/04572
- US-A- 4 442 953
- US-A- 4 831 866

## Description

La présente invention a trait à la distribution dosée de liquides notamment des liquides visqueux tels que des lubrifiants.

Il n'existe pas actuellement dans le domaine de la distribution de liquides en vrac, par exemple les hydrocarbures, de systèmes de délivrance de quantités dosées, pré-affichées par le client ou l'utilisateur, d'une précision et d'une fidélité, quant au volume effectivement délivré, suffisantes pour satisfaire la réglementation légale visant les appareils distributeurs d'usage public.

Cette réglementation impose en effet, pour les appareils de distribution de quantités dosées que l'écart entre la quantité demandée et la quantité livrée qui sert à établir le prix à payer par l'acheteur, ne soit pas supérieur à un pourcentage fixé à cinq pour mille, l'écart noté avec les appareils distributeurs connus étant la plupart du temps supérieur à ce seuil pré-fixé et fluctuant à l'intérieur d'une large plage pour des quantités pré-affichées identiques.

Par le document US-A-4 442 953, on connaît un dispositif de distribution de quantités dosées d'un liquide, plus particulièrement un hydrocarbure, comprenant une pompe actionnée par un moteur, un débitmètre monté en aval de la pompe et délivrant des impulsions électriques en nombre proportionnel à la quantité de liquide ayant traversé le débimètre et un circuit électronique de commande relié au moteur et au débitmètre et chargé de contrôler la fourniture d'une quantité dosée préalablement affichée par l'utilisateur.

Ce dispositif fonctionne selon le principe suivant : préalablement à la mise en service du dispositif, on établit une courbe de surquantité de liquide délivrée en fonction du débit indiqué par le débitmètre. Cette courbe est prise comme référence de compensation de l'inertie de la pompe et mise en mémoire dans ledit circuit électronique de commande.

Par la suite, à chaque quantité dosée affichée par un utilisateur du dispositif, le circuit électronique compte le nombre d'impulsions délivrées par le débitmètre et, lorsque ledit compte atteint une valeur égale au nombre d'impulsions correspondant à la quantité pré-affichée diminué du nombre d'impulsions correspondant, selon ladite courbe de référence mémorisée, au débit actuel mesuré par le débitmètre, le moteur de la pompe est arrêté.

Un tel principe ne garantit cependant pas la précision des quantités dosées, car ladite courbe de référence n'est valable que dans les conditions de son établissement, lesquelles ne sont pas nécessairement celles des futures délivrances de liqude, à cause des variations de température du liquide générant une variation de la viscosité, des variations de vitesse du moteur d'entraînement de la pompe et des variations de la hauteur manométrique du liquide dans le réservoir notamment.

Ce dispositif qui ne répond donc pas en toutes circonstances aux exigences posées par la réglementation légale et rappelées ci-dessus, est a fortiori inutilisable pour la distribution de quantités dosées de liquides visqueux et tout particulèrement des lubrifiants, du fait de leur viscosité qui entraîne des variations de débit selon la température beaucoup plus importantes que les liquides non ou peu visqueux, tels que les hydrocarbures.

Par ailleurs, par le document WO-A-8 604 572, on connaît un système de dosage de liquide destiné à la distribution de petits volumes de liquide d'une manière fiable et précise.

Plus précisément, ce système, destiné à l'ajustement de la quantité de liquide d'un bain révélateur photographique, détermine, à chaque livraison, la différence entre la quantité mesurée et la quantité effectivement délivrée et corrigera en conséquence la livraison suivante.

Un tel processus ne permet nullement de garantir la précision de la quantité délivrée, puisque cette dernière n'est pas réajustée, ce qui ne serait d'ailleurs pas possible, la différence constatée étant simplement intégrée à la livraison suivante.

La présente invention vise donc à proposer un procédé de distribution de quantités dosées de liquides et notamment, bien que non exclusivement, des liquides visqueux tels que des lubrifiants, éliminant l'imprécision des appareils distributeurs connus et ramenant les fluctuations de la valeur effectivement délivrée d'une même quantité pré-affichée, à l'intérieur d'une plage extrêmement réduite et en tout état de cause inférieure à l'écart maximal toléré par la réglementation.

A cet effet, l'invention a pour objet un procédé de distribution de quantités dosées de liquide, notamment visqueux, à l'aide d'une installation comprenant une canalisation reliant un réservoir contenant le liquide à distribuer à un organe de distribution à clapet de retenue et dans laquelle sont interposées un groupe de pompage et un compteur volumétrique à impulsions électriques, procédé dans lequel on pré-affiche la quantité désirée, on détermine le nombre d'impulsions correspondant à ladite quantité désirée, on déclenche la distribution du liquide, puis on l'arrête quand la différence entre le nombre d'impulsions déterminé et le nombre d'impulsions délivrées par le compteur atteint une valeur déterminée au préalable en fonction des caractéristiques de ladite installation, ledit procédé étant caractérisé en ce que le déplacement du liquide dans ladite canalisation est réalisé à débit constant, à faible pression et en régime d'écoulement laminaire et en ce que ladite valeur déterminée au préalable est une constante pour une installation et un liquide à distribuer déterminés.

L'invention a pour objet aussi une installation comme revendiquée dans la revendication 5.

La détermination préalable de ladite valeur déterminée fonction des caractéristiques de l'installation de distribution consiste à mesurer, dans lesdites conditions de déplacement du liquide à débit constant, faible pression et régime laminaire, la différence de volume existant entre la quantité délivrée effectivement et la quantité détectée par le compteur de l'installation et à prendre comme ladite valeur un nombre d'impulsions dudit compteur correspondant à un volume égal à ladite différence de volume ou voisin de celle-ci.

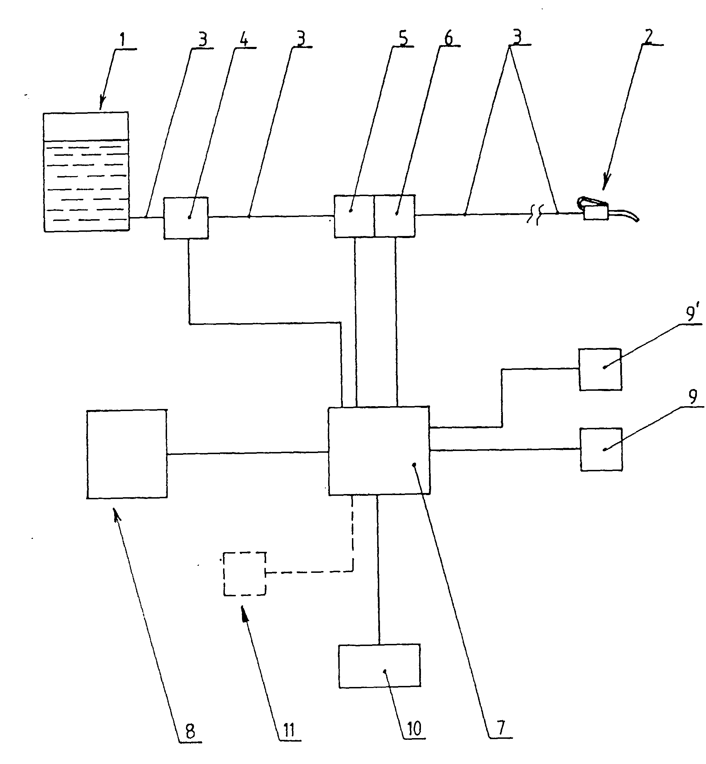

D'autres caractéristiques et avantages ressortiront de la description qui va suivre d'un mode de réalisation d'une installation de distribution de liquides mettant en oeuvre le procédé de l'invention, description donnée à titre d'exemple uniquement et en regard du dessin annexé sur lequel la figure unique est un schéma fonctionnel d'une installation de fourniture de quantités dosées d'huile de lubrification.

Sur cette figure unique, on a schématisé en 1 un réservoir d'huile, en 2 un pistolet distributeur à clapet de retenue, taré par exemple à 0,5 bar, relié au réservoir 1 par une canalisation souple 3 dans laquelle sont interposés un moyen de circulation du liquide constitué par un groupe de pompage 4 avec ou sans moto-variateur, une électro-vanne 5 et un compteur volumétrique à impulsions 6 disposé immédiatement en aval de l'électro-vanne 5.

Conformément à l'invention, le groupe 4 comporte une pompe volumétrique à débit constant, par exemple une pompe à engrenages agencée par rapport au réservoir 1 en sorte d'être constamment gorgée. En outre, toujours conformément à l'invention, la canalisation 3 présente un diamètre important, en particulier un diamètre correspondant au diamètre de sortie de ladite pompe à engrenages, ou égal à deux ou trois fois ce dernier, en sorte d'avoir un écoulement du liquide dans ladite canalisation, à faible pression et en régime laminaire, assurant ainsi un débit constant sans inertie massique.

L'efficacité du système est telle que la distance entre la pompe et le point de livraison peut être, en théorie, illimitée et qu'en pratique seul le moment d'inertie massique peut faire obstacle à une livraison authentique. Les essais ont montré qu'avec un débit de 8 à 15 litres/mn et une viscosité de 3000 millipascals par seconde, aucune imprécision ne s'est révélée à 100 m de la pompe.

L'installation 1 à 6 se distingue ainsi des installations de distribution d'hydrocarbures ou de liquides non ou peu visqueux, lesquelles comportent des pompes à palettes ou turbine ne garantissant pas de constance de débit si la viscosité du produit vient à varier. Ladite installation 1 à 6 se distingue également des installations connues de délivrance d'huile, lesquelles utilisent des pompes pneumatiques ou à palettes dont le débit varie, en plus ou en moins, en même temps que la viscosité de l'huile à distribuer, ce qui ne permet pas davantage de garantir la précision de la quantité délivrée.

En 7 est schématisé un ensemble électronique de traitement relié au groupe de pompage 4, à l'électro-vanne 5, au compteur 6, à une unité 8 de comptage-décomptage, à une imprimante 9 et à une console 10 de dialogue et visualisation comprenant un clavier et un écran d'affichage et éventuellement un module 11 d'introduction d'une carte magnétique ou similaire.

L'électro-vanne 5, située en amont du compteur 6, ne s'ouvre qu'après acceptation d'une demande de livraison. Le compteur 6 est un compteur électronique délivrant une impulsion électrique à chaque passage dans le compteur d'une quantité déterminée de liquide, par exemple une impulsion (en double chaîne) pour chaque passage de 10 ml de liquide.

L'invention va être ici décrite dans une application à la distribution de quantités dosées d'huile de lubrification pour véhicules automobiles parce que la demande de ce produit se manifeste généralement par une quantité déterminée à l'avance. Ce problème n'apparaît pas pour la distribution de carburants automobiles pour laquelle l'automobiliste ne demande pas une quantité précise de carburant ou bien demande une quantité correspondant à une somme d'argent déterminée. Il est bien entendu possible pour l'automobiliste d'arrêter la distribution lorsque le compteur, en volume, et non pas en francs, a atteint la valeur qu'il désire et la quantité effectivement délivrée correspond bien à la quantité affichée dans les limites d'écart imposées par la réglementation (cinq pour mille), mais l'arrêt de la distribution sur le chiffre désiré est tout à fait aléatoire, car il implique une dextérité et une habitude hors de portée du plus grand nombre.

Ce système de distribution de carburant est en fait incapable de délivrer une quantité pré-affichée, c'est-à-dire, d'arrêter la distribution, lorsque le dispositif de comptage a atteint la quantité pré-affichée, en sorte de délivrer effectivement la quantité correspondante, dans lesdites limites de la réglementation.

En effet, lorsque le compteur de l'installation affiche une valeur particulière, par exemple dix litres, on constate que la quantité effectivement délivrée par le pistolet distributeur n'est pas dix litres mais une valeur légèrement supérieure. Ceci provient du délai ou retard inévitable survenant entre la détection de la quantité de liquide transitant à l'intérieur de la chambre de comptage du compteur et la fermeture effective de l'électro-vanne et du clapet du pistolet distributeur. Ce délai ou retard est spécifique à chaque installation et dépend des caractéristiques techniques et constructives des composants de l'installation.

Il est à noter que ce retard peut, pour une même installation, varier, d'une utilisation à une autre, ainsi qu'éventuellement en fonction d'autres paramètres étrangers à l'installation tels que la nature, la viscosité du produit liquide distribué, les conditions climatiques (température, pression).

Le procédé de l'invention consiste, dans une phase préliminaire, à mesurer de manière précise la différence de volume existant entre la quantité délivrée par le pistolet distributeur 2 et la quantité correspondante affichée par le compteur 6, le liquide circulant dans la canalisation 3 à débit constant, à faible pression et en régime laminaire.

Il est à noter qu'avec un même type de liquide et dans les mêmes conditions de température et pression, ledit écart de volume est indépendant de la quantité délivrée par le pistolet 2.

Connaissant la valeur de cet écart et le nombre d'impulsions délivrées par le compteur 6 par unité de volume, on déduit le nombre d'impulsions dont il faudra tenir compte pour que la livraison corresponde, en volume et de préférence aussi précisément que possible, au volume pré-affiché par l'utilisateur. On va dénommer impulsions de tarage le nombre d'impulsions ci-dessus, par analogie avec l'opération de tarage d'un système de mesure de poids.

L'utilisateur va afficher sur le dispositif d'affichage équipant la console 10 la quantité d'huile désirée. L'ensemble électronique de traitement 7 va alors charger le compteur-décompteur 8 d'une quantité d'impulsions correspondant au volume affiché.

Dès la validation commandée par l'utilisateur, l'ensemble électronique de traitement 7 met en route le groupe de pompage 4, l'électro-vanne 5 et le compteur 6, et l'huile est délivrée par le pistolet 2, dans les mêmes conditions que ci-dessus, à savoir à débit constant, faible pression et en régime laminaire.

Au fur et à mesure de la délivrance, le compteur 6 envoie des impulsions, dites de décomptage, au compteur-décompteur 8, via l'ensemble électronique de traitement 7. Lorsque le décompte dans le dispositif 8, en se réduisant, atteint le nombre des impulsions de tarage mis préalablement en mémoire dans l'ensemble électronique de traitement 7, ce dernier ordonne l'arrêt de l'électro-vanne 5. L'unité de comptage-décomptage 8 est remise ensuite à zéro.

Il est à noter que le résultat serait le même si le nombre d'impulsions correspondant au volume affiché était, avant d'être introduit dans l'unité 8, amputée par l'ensemble électronique de traitement 7 dudit nombre d'impulsions de tarage et si l'électro-vanne 5 était arrêtée au retour à zéro de l'unité 8. Il suffit de programmer l'ensemble électronique de traitement 7 en conséquence.

Le nombre des impulsions de tarage est déterminé en sorte que les éventuelles variations d'écart entre la quantité délivrée et celle pré-affichée soient de préférence aussi proche de zéro que possible et en tout cas inférieures au seuil fixé par la réglementation.

Dans le souci d'assurer un débit de liquide constant dans la canalisation 3, le groupe de pompage 4 comporte un moteur régulé en vitesse.

Le module 11 permet, si besoin, à un utilisateur d'accéder au système par une carte magnétique ou analogue.

L'ensemble électronique de traitement 7 avec ses annexes 8 et 11 peut desservir et contrôler en parallèle plusieurs circuits de distribution de divers produits, comportant plusieurs postes, dans la mesure où chacun comporte un ensemble électro-vanne 5- compteur 6 tel que ci-dessus.

L'imprimante 9 permet d'éditer des tickets de livraison ou des factures mentionnant le choix du produit, la référence de l'opération, la quantité délivrée, éventuellement le prix à payer et l'identification de l'opérateur dans le cas de l'utilisation d'un module 11 pour cartes magnétiques.

Une imprimante annexe 9' est avantageusement prévue pour l'édition de journaux des opérations, la gestion des produits, etc...

Le procédé de l'invention permet ainsi de délivrer des quantités prédéterminées de liquide de densité et de viscosité variables, avec une précision garantie pouvant être proche du zéro théorique d'erreur dans la précision requise et, en tout cas inférieure à celle imposée par la réglementation actuelle, à savoir cinq pour mille d'erreur maximum, suivant les prescriptions définies par l'Organisation Internationale de Métrologie Légale.

Enfin, l'invention n'est évidemment pas limitée au mode de réalisation représenté et décrit ci-dessus mais en couvre au contraire toutes les variantes notamment en ce qui concerne l'agencement de l'installation de distribution, la nature et l'agencement du moyen de commande et d'arrêt de délivrance et du compteur volumétrique dans la mesure où celui-ci fournit des impulsions électriques en nombre proportionnel au volume mesuré.

## Revendications

1. Procédé de distribution de quantités dosées de liquide, notamment visqueux, à l'aide d'une installation comprenant une canalisation (3) reliant un réservoir (1) contenant le liquide à distribuer à un organe de distribution à clapet de retenue (2) et dans laquelle sont interposées un groupe de pompage (4) et un compteur volumétrique à impulsions électriques (6), procédé dans lequel on pré-affiche la quantité désirée, on détermine le nombre d'impulsions correspondant à ladite quantité désirée, on déclenche la distribution du liquide, puis on l'arrête quand la différence entre le nombre d'impulsions déterminé et le nombre d'impulsions délivrées par le compteur (6) atteint une valeur déterminée au préalable en fonction des caractéristiques de ladite installation, ledit procédé étant caractérisé en ce que le déplacement du liquide dans ladite canalisation (3) est réalisé à débit constant, à faible pression et en régime d'écoulement laminaire et en ce que ladite valeur déterminée au préalable est une constante pour une installation et un liquide à distribuer déterminés.

2. Procédé de distribution suivant la revendication 1, caractérisé en ce que le nombre d'impulsions déterminé correspondant à la quantité désirée est chargé dans une unité de comptage-décomptage (8), les impulsions du compteur (6) sont envoyées en décompte dans ladite unité (8) et la distribution est arrêtée lorsque le reste à décompter des impulsions électriques atteint ladite valeur prédéterminée.

3. Procédé de distribution suivant la revendication 1, caractérisé en ce que le nombre d'impulsions déterminé correspondant à la quantité désirée est chargé dans une unité de comptage-décomptage (8), déduction faite du nombre d'impulsions correspondant à ladite valeur prédéterminée, les impulsions du compteur (6) sont envoyées en décompte dans ladite unité (8) et la distribution est arrêtée lorsque l'unité de comptage-décomptage est revenue à zéro.

4. Procédé suivant l'une des revendications 1 à 3, caractérisé en ce que la détermination préalable de ladite valeur déterminée fonction des caractéristiques de l'installation de distribution consiste à mesurer la différence de volume existant entre la quantité délivrée effectivement et la quantité détectée par le compteur (6) de l'installation, le liquide circulant dans les mêmes conditions de débit, pression et régime laminaire que celles des distributions futures et à prendre comme ladite valeur un nombre d'impulsions dudit compteur correspondant à un volume égal à ladite différence de volume ou voisin de celle-ci.

5. Installation de distribution de quantités dosées, notamment de liquides visqueux, tels que des lubrifiants, pour la mise en oeuvre du procédé suivant l'une des revendications 1 à 3, comprenant :
• un réservoir de liquide à distribuer (1) ;
• un organe de distribution (2) à clapet de retenue ;
• une canalisation (3) de liaison dudit réservoir (1) audit organe de distribution (2), dans laquelle sont interposés un groupe de pompage (4), une électrovanne (5) et • un compteur volumétrique à impulsions électriques (6), lesdites canalisations (3), groupe de pompage (4), électrovanne (5) et compteur volumétrique (6) étant déterminés de façon que le déplacement du liquide dans ladite canalisation (3) soit à débit constant, à faible pression et en régime d'écoulement laminaire,
• un ensemble électronique de traitement (7) relié à l'électrovanne (5), au compteur (6) et au groupe de pompage (4),
• une unité (8) de comptage-décomptable d'impulsions électriques, reliée à l'ensemble électronique de traitement (7), et
• une console de dialogue et visualisation (10) reliée audit ensemble électronique de traitement.

6. Installation suivant la revendication 5, caractérisée en ce que ledit groupe de pompage (4) comporte une pompe à engrenages entraînée à vitesse régulée et ladite canalisation (3) présente un diamètre au moins égal à celui de la sortie de ladite pompe à engrenages.

## Patentansprüche

1. Verfahren zum Verteilen dosierter Mengen insbesondere viskoser Flüssigkeiten mit Hilfe einer Anordnung, die ein Röhrensystem (3) umfaßt, das einen die zu verteilende Flüssigkeit enthaltenden Behälter (1) mit einem Verteilungselement (2) mit Rückschlagventil verbindet und in das eine Pumpengruppe (4) sowie ein mit elektrischen Impulsen arbeitendes Volumenmeßgerät (6) eingefügt sind, wobei in dem Verfahren die gewünschte Menge im voraus angezeigt wird, die der gewünschten Menge entsprechende Anzahl von Impulsen bestimmt wird, die Verteilung der Flüssigkeit begonnen und dann beendet wird, wenn die Differenz zwischen der bestimmten Impulsanzahl und der vom Meßgerät (6) gelieferten Anzahl von Impulsen einen vorher in Abhängigkeit von den Eigenschaften der Anordnung bestimmten Wert erreicht, wobei das Verfahren dadurch gekennzeichnet ist, daß die Verschiebung der Flüssigkeit in dem Röhrensystem (3) mit konstantem Durchsatz bei niedrigem Druck und mit laminarer Strömung erfolgt und daß der vorher bestimmte Wert für eine Anordnung und eine bestimmte zu verteilende Flüssigkeit eine Konstante ist.

2. Verteilungsverfahren nach Anspruch 1, dadurch gekennzeichnet, daß die bestimmte Anzahl von Impulsen, die der gewünschten Menge entspricht, in eine Aufwärts/Abwärts-Zähleinheit (8) geladen wird, die Impulse des Zählers (6) zur Abwärtszählung in die Einheit (8) geschickt werden und die Verteilung angehalten wird, wenn der abwärtszuzählende Rest der elektrischen Impulse den vorgegebenen Wert erreicht.

3. Verteilungsverfahren nach Anspruch 1, dadurch gekennzeichnet, daß die bestimmte Anzahl von Impulsen, die der gewünschten Menge entspricht, in eine Aufwärts/Abwärts-Zähleinheit (8) geladen wird, von der Anzahl von Impulsen ein dem vorgegebenen Wert entsprechender Wert abgezogen wird, die Impulse des Zählers (6) zur Abwärtszählung in die Einheit (8) geschickt werden und die Verteilung angehalten wird, wenn die Aufwärts/Abwärts-Zähleinheit bei null angelangt ist.

4. Verfahren nach einem der Ansprüche 1 bis 3, dadurch gekennzeichnet, daß die vorhergehende Bestimmung des bestimmten Werts in Abhängigkeit von den Eigenschaften der Verteilungsanordnung darin besteht, die Volumendifferenz zwischen der effektiv gelieferten Menge und der vom Zähler (6) der Anordnung erfaßten Menge zu messen, wobei die Flüssigkeit unter denselben Durchsatz-, Druck- und Laminarströmungsbedingungen wie jene künftiger Verteilungsvorgänge zirkuliert, und für den Wert eine Impulsanzahl des Zählers zu nehmen, die einem Volumen entspricht, die gleich der Volumendifferenz ist oder in deren Nähe liegt.

5. Anordnung zur Verteilung dosierter Mengen insbesondere viskoser Flüssigkeiten wie etwa Schmiermitteln zur Ausführung des Verfahrens nach einem der Ansprüche 1 bis 3, mit:
- einem Behälter (1) für zu verteilende Flüssigkeit;
- einem Verteilungselement (2) mit Rückschlagventil;
- einem Röhrensystem (3) zur Verbindung des Behälters (1) mit dem Verteilungselement (2), wobei in das Röhrensystem eine Pumpengruppe (4), ein Elektroventil (5) und ein mit elektrischen Impulsen arbeitendes Volumenmeßgerät (6) eingefügt sind, wobei das Röhrensystem (3), die Pumpengruppe (4), das Elektroventil (5) und das Volumenmeßgerät (6) in der Weise bestimmt sind, daß die Verschiebung der Flüssigkeit im Röhrensystem (3) einen konstanten Durchsatz, einen geringen Druck und eine laminare Strömung aufweist,
- einer elektronischen Verarbeitungseinheit (7), die mit dem Elektroventil (5), dem Meßgerät (6) und der Pumpengruppe (4) verbunden ist,
- einer Einheit (8) zum Aufwärtszählen/Abwärtszählen elektrischer Impulse, die mit der elektronischen Verarbeitungseinheit (7) verbunden ist, und
- einer Dialogführungs- und Anzeigekonsole (10), die mit der elektronischen Verarbeitungseinheit verbunden ist.

6. Anordnung nach Anspruch 5, dadurch gekennzeichnet, daß die Pumpengruppe (4) eine Zahnradpumpe enthält, die mit einer eingestellten Geschwindigkeit angetrieben wird, und das Röhrensystem (3) einen Durchmesser aufweist, der wenigstens gleich demjenigen des Ausgangs der Zahnradpumpe ist.

## Claims

1. Method of distributing measured amounts of a liquid, notably viscous, with the help of an installation comprising a pipe (3) connecting a thank (1) containing the liquid to be distributed to a distribution device with a non-return valve (2) and in which a pumping unit (4) and an electrical impulse volumetric meter (6) are interposed, a method in which the desired amount is pre-displayed, the number of impulses corresponding to said desired amount is determined, the distribution of the liquid is started, and then it is stopped when the difference between the number of impulses determined and the number of impulses delivered by the meter (6) reaches a value determined beforehand as a function of the characteristics of said installation, said method being characterised in that the movement of the liquid in said pipe (3) is carried out at constant throughput, at low pressure and in a laminar flow state, and in that said value determined beforehand is a constant for a specific installation and for a liquid to be distributed.

2. Distribution method according to Claim 1, characterised in that the determined number of impulses corresponding to the desired amount is loaded into an up/down counter unit (8), the impulses from the meter (6) are sent in counting-down mode to said unit (8) and the distribution is stopped when the remainder to be counted down by the electrical impulses reaches said predetermined value.

3. Distribution method according to Claim 1, characterised in that the determined number of impulses corresponding to the desired amount is loaded into an up/down counter unit (8), a deduction made of the number of impulses corresponding to said predetermined value, the impulses from the meter (6) are sent in counting-down mode to said unit (8) and the distribution is stopped when the up/down counter unit has returned to zero.

4. Method according to one of Claims 1 to 3, characterised in that the prior determination of said determined value which is a function of the characteristics of the distribution installation consists of measuring the difference in volume existing between the amount actually delivered and the amount detected by the meter (6) of the installation, the liquid flowing under the same throughput, pressure and laminar state conditions as those of future distributions and of taking as said value a number of impulses of said meter corresponding to a volume equal to said difference in volume or close to it.

5. Installation for the distribution of measured amounts, notably of viscous liquids, such as lubricants, for implementing the method according to one of Claims 1 to 3, comprising:
- a thank of liquid to be distributed (1) ;
- a distribution device (2) with a non-return valve;
- a pipe (3) for connecting said reservoir (1) to said distribution device (2), in which a pumping unit (4), a solenoid valve (5) and an electrical impulse volumetric meter (6) are interposed, said pipes (3), pumping unit (4), solenoid valve (5) and volumetric meter (6) being determined so that the movement of the liquid in said pipe (3) is at a constant throughput, at low pressure and in a laminar flow state,
- an electronic processing assembly (7) connected to the solenoid valve (5), to the meter (6) and to the pumping unit (4),
- an electrical impulse up/down counter unit (8), connected to the electronic processing assembly (7), and
- a communication and display console (10) connected to said electronic; processing assembly.

6. Installation according to Claim 5, characterised in that said pumping unit (4) has a gear pump driven at a regulated speed and said pipe (3) has a diameter at least equal to that of the output of said gear pump.
